(19) 

Europäisches
Patentamt

European
Patent Office

Office européen
des brevets

(11) **EP 4 586 026 A1**

(12) **EUROPEAN PATENT APPLICATION**
published in accordance with Art. 153(4) EPC

(43) Date of publication:
**16.07.2025 Bulletin 2025/29**

(21) Application number: **23933282.8**

(22) Date of filing: **13.12.2023**

(51) International Patent Classification (IPC):
*G05B 13/04* (2006.01)      *G05D 1/43* (2024.01)
*G05D 1/644* (2024.01)      *G05D 109/10* (2024.01)

(86) International application number:
**PCT/CN2023/138362**

(87) International publication number:
**WO 2025/112110 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2023  CN 202311629077**

(71) Applicant: **Shanghai Allynav Technology Co., Ltd.
Shanghai 201702 (CN)**

(72) Inventors:
• **WAN, Fuping**
  **Shanghai 201702 (CN)**
• **LI, Xiaoyu**
  **Shanghai 201702 (CN)**
• **WANG, Rui**
  **Shanghai 201702 (CN)**
• **JU, Dayuan**
  **Shanghai 201702 (CN)**

(74) Representative: **ABG Intellectual Property Law,
S.L.
Avenida de Burgos, 16D
Edificio Euromor
28036 Madrid (ES)**

(54) **NEW ARTICULATED VEHICLE CONTROL METHOD**

(57)     A new control method for an articulated vehicle.
The method comprises: S100: calculating a lateral position deviation and a yaw angle deviation based on a current pose and a reference path; S200: calculating a curvature deviation based on the current pose and the reference path; S300: constructing a kinematic error model to solve a control value.

FIG. 1

EP 4 586 026 A1

## Description

### FIELD OF THE DISCLOSURE

The present invention relates to the field of automatic control technology, and specifically relates to a new control method for an articulated vehicle.

### BACKGROUND

The autonomous control of vehicles such as agricultural machinery, loading and unloading trucks, and mining transport vehicles needs to answer three basic questions: Where am I? Where am I going? How do I get there? The autonomous driving system that controls the steering of the vehicle belongs to the category of the third question. Solve the problem of how to get there. The first step is to build a control model. For vehicles with articulated steering, due to their special two-segment articulated structural characteristics, the general "bicycle model" is not applicable, so it is necessary to build a suitable kinematic control model based on motion and geometric constraints.

For the control model of articulated vehicles, it is generally based on the nonholonomic constraint equations of the vehicle and the two-segment rigid body motion constraint equations to build a "single midpoint" error model based on the midpoint of the front wheel of the articulated steering vehicle, or a "dual midpoint" error model based on the midpoint of the front wheels and the midpoint of the rear wheels of the articulated steering vehicle. Although the former is simple, when the vehicle is driving along a curve, due to its articulated steering structure, the front half of the vehicle will move along the curve, while the rear half of the vehicle will obviously deviate from the planned curve. The latter is very likely to cause the problem of model variable redundancy, which will bring certain difficulties to the subsequent solution.

### SUMMARY

In order to solve the above technical problems, the present invention provides the following technical solutions:

a new control method for an articulated vehicle, comprising the following steps,
S100: calculate a lateral position deviation and a yaw angle deviation based on a current pose and a reference path;
S200: calculate a curvature deviation based on the current pose and the reference path;
S300: construct a kinematic error model to solve a control value.

Preferably, in the step S100,

assuming that the current pose of the vehicle is $P_0(x_i, y_i, \theta_i)$, and the reference path is $\Gamma(x_r(s), y_r(s))$, where s is a parameter, and if a point closest to a current point at this moment is $P^*(x_r(s^*), y_r(s^*))$; and

the current pose is $P_0(x_i, y_i, \theta_i)$: $x_i$ -an x-coordinate value in a world coordinate system, $y_i$ -a y-coordinate value in the world coordinate system, $\theta_i$ -an inclination angle of a vehicle coordinate system (with a midpoint of the vehicle's front wheels as an origin and a direction of the vehicle's front as a positive x-axis, in accordance with a right-hand rule) in the world coordinate system, that is, a current posture of the vehicle;

the reference path is $\Gamma(\mathbf{x_r(s)}, \mathbf{y_r(s)})$: $x_r(s)$- an x-coordinate expression of the reference path in the world coordinate system, $y_r(s)$- a y-coordinate expression of the reference path in the world coordinate system, s- an independent variable parameter; and

$s^*$: an independent variable parameter corresponding to the point closest to the current point in the reference path;

$$\vec{t} = \frac{\left(\frac{\partial x_r(s)}{\partial s}|s=s^*, \frac{\partial y_r(s)}{\partial s}|s=s^*\right)}{\left\|\frac{\partial x_r(s)}{\partial s}|s=s^*, \frac{\partial y_r(s)}{\partial s}|s=s^*\right\|} =$$

then a tangent unit vector at $P^*(x_r(s^*), y_r(s^*))$ is $(t_x, t_y)$;
then an absolute deviation vector at $P_0(x_i, y_i, \theta_i)$ is $\vec{d} = (x_i - x_r(s^*), y_i - y_r(s^*)) = (d_x, d_y)$;
then the lateral position deviation $\varepsilon_y$ at $P_0(x_i, y_i, \theta_i)$ is a cross product of $\vec{d}$ and $\vec{t}$:

$$\varepsilon_y = \vec{t} \times \vec{d} = \begin{vmatrix} x & y \\ t_x & t_y \\ d_x & d_y \end{vmatrix} = t_x d_y - t_y d_x;$$

then the yaw angle deviation $\varepsilon_\theta$ at $P_0(x_i, y_i, \theta_i)$ is:

$$\varepsilon_\theta = \theta_i - a\,tan2\left(\frac{\partial y_r(s)}{\partial s}|s = s^*, \frac{\partial x_r(s)}{\partial s}|s = s^*\right).$$

Preferably, in the step S200,
a path curvature at $P^*(x_r(s^*), y_r(s^*))$ is:

$$\kappa(s^*) = \frac{\frac{\partial^2 y_r(s)}{\partial s^2}|s=s^* * \frac{\partial x_r(s)}{\partial s}|s=s^* - \frac{\partial^2 x_r(s)}{\partial s^2}|s=s^* * \frac{\partial y_r(s)}{\partial s}|s=s^*}{\sqrt{\left(\left(\frac{\partial x_r(s)}{\partial s}|s=s^*\right)^2 + \left(\frac{\partial y_r(s)}{\partial s}|s=s^*\right)^2\right)^3}};$$

and based on distances from a midpoint of front wheels and a midpoint of rear wheels to an articulation and an articulation angle, it is easy to find an approximate circle tangent to the two midpoints, whose radius is r,

then the curvature deviation at $P_0(x_i, y_i, \theta_i)$ is: $\varepsilon_c = \frac{1}{r} - \kappa(s^*)$.

Preferably, in the step S300,

a nonholonomic constraint equation:

$$\begin{cases} \dot{x}_1 \sin\theta_1 = \dot{y}_1 \cos\theta_1 \\ \dot{x}_0 \sin\theta_0 = \dot{y}_0 \cos\theta_0 \end{cases},$$

and a two-segment rigid body constraint equation:

$$\begin{cases} x_0 = x_1 + L_1 \cos\theta_1 + L_0 \cos\theta_0 \\ y_0 = y_1 + L_1 \sin\theta_1 + L_0 \sin\theta_0 \end{cases},$$

wherein $(x_0, y_0)$, $(x_1, y_1)$ are coordinates of a midpoint of front wheels and a midpoint of rear wheels in a world coordinate system respectively, $\theta_0, \theta_1$ are inclination angles of a front wheel midpoint coordinate system (with the midpoint of front wheels as an origin, a vehicle forward direction as an x-positive, in accordance with a right-hand rule) and a rear wheel midpoint coordinate system (with the midpoint of rear wheels as the origin, the vehicle forward direction as an x-positive, in accordance with a right-hand rule) in the world coordinate system, that is, current postures of front and rear parts of the vehicle;
and according to the nonholonomic constraint equation and the two-segment rigid body constraint equation of the articulated vehicle, a relationship between an error vector $\vec{x} = (\varepsilon_y, \varepsilon_\theta, \varepsilon_c)^T$ and its differential $\dot{\vec{x}} = \left(\dot{\varepsilon}_y, \dot{\varepsilon}_\theta, \dot{\varepsilon}_c\right)^T$ is

$$\begin{bmatrix} \dot{\varepsilon}_y \\ \dot{\varepsilon}_\theta \\ \dot{\varepsilon}_c \end{bmatrix} = \begin{bmatrix} 0 & v_0 \cos\varepsilon_\theta & 0 \\ 0 & 0 & v_0 \\ 0 & 0 & 0 \end{bmatrix} \begin{bmatrix} \varepsilon_y \\ \varepsilon_\theta \\ \varepsilon_c \end{bmatrix} + \begin{bmatrix} 0 \\ 0 \\ \frac{1}{L} \end{bmatrix}\dot{\gamma} + \begin{bmatrix} 0 \\ 0 \\ \frac{L_1}{v_0 L} \end{bmatrix}\ddot{\gamma};$$

where $L_0$ is a front axle distance (a distance from an articulation to the midpoint of front wheels), $L_1$ is a rear axle distance, and an overall wheelbase $L = L_0 + L_1$ is to eliminate $\ddot{\gamma}$, and processing the state variables slightly to get:

$$\begin{bmatrix} \dot{\varepsilon}_y \\ \dot{\varepsilon}_\theta \\ \dot{\varepsilon}_c' \end{bmatrix} = \begin{bmatrix} 0 & v_0 \cos\varepsilon_\theta & 0 \\ 0 & 0 & v_0 \\ 0 & 0 & 0 \end{bmatrix} \begin{bmatrix} \varepsilon_y \\ \varepsilon_\theta \\ \varepsilon_c' \end{bmatrix} + \begin{bmatrix} 0 \\ \frac{L_1}{L} \\ \frac{1}{L} \end{bmatrix}\dot{\gamma}, \varepsilon_c' = \varepsilon_c - \frac{L_1\dot{\gamma}}{v_0 L};$$

$v_0$: a speed of the front part of the vehicle;

$\gamma$: an angle at the articulation;

$\dot{\gamma}$: an angular velocity at the articulation;

$\ddot{\gamma}$: an angular acceleration at the articulation;

and using standard LQR or MPC to solve the equation and then obtaining the control value $\dot{\gamma}$.

Compared with the prior art, the beneficial effect of the present invention is: in order to solve the problem of the front and rear parts of the articulated steering vehicle being consistent with the planned curve, it is also not desirable to introduce additional constraints into the control model to reduce the difficulty of subsequent solutions. Taking full account of the structural characteristics of the articulated steering vehicle, a new control model is proposed. The control model also takes the midpoint of the front wheels of the vehicle as the reference center, but in the error model, in addition to the lateral position deviation, yaw angle deviation, etc., the concept of curvature deviation is creatively proposed. The curvature deviation can accurately describe the problem of the accuracy of the front and rear parts of the articulated vehicle matching the planned curve, so that the control error model of the articulated vehicle can be fully described by fewer state variables, taking full advantage of the simplicity of "single midpoint" and the ability of "dual midpoint" to solve the problem of the trajectory of the front and rear parts of the vehicle being consistent with the planned curve.

Working principle of the present invention: the vehicle body is equipped with a GNSS antenna or other positioning data measurement device, and an angle sensor for detecting the real-time articulation angle of the vehicle, or an inertial measurement unit installed on the vehicle body estimates the real-time angle and angular velocity of the articulation, which are substituted into the model formula to solve the problem of the trajectory of the front and rear parts of the vehicle being consistent with the path during the curve driving process.

## BRIEF DESCRIPTION OF THE DRAWINGS

The accompanying drawings are used to provide a further understanding of the present invention and constitute a part of the specification. Together with the embodiments of the present invention, they are used to explain the present invention and do not constitute a limitation of the present invention. In the accompanying drawings:

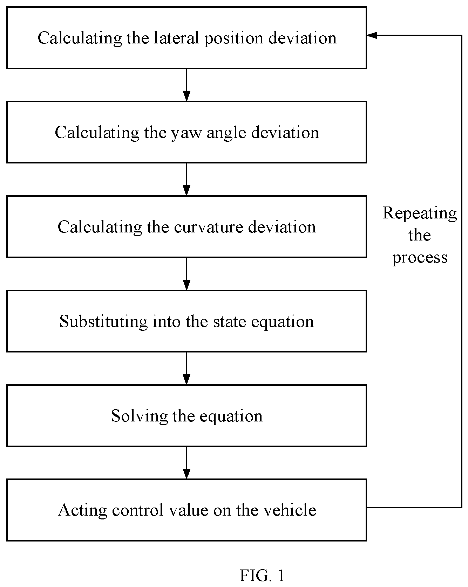

FIG. 1 is a schematic diagram of the process of the present invention.

## DESCRIPTION OF THE ILLUSTRATED EMBODIMENTS

The following will combine the drawings in the embodiments of the present invention to clearly and completely describe the technical solutions in the embodiments of the present invention. Obviously, the described embodiments are only part of the embodiments of the present invention, not all of them. Based on the embodiments in the present invention, all other embodiments obtained by ordinary technicians in this field without creative work are within the scope of protection of the present invention.

The present invention provides a technical solution, and the specific flow chart refers to FIG. 1. The specific implementation process of the method is as follows.

A GNSS antenna or other positioning data measurement device needs to be installed on the vehicle body, and an angle sensor for detecting the real-time articulation angle of the vehicle needs to be installed, or the real-time angle and angular velocity of the articulation point can be estimated by an inertial measurement unit installed on the vehicle body.

1.Calculate the lateral position deviation and yaw angle deviation based on a current pose and a reference path:

assumeing that the current pose of the vehicle is $P_0(x_i, y_i, \theta_i)$, the reference path is $\Gamma(x_r(s), y_r(s))$, where s is a parameter, if a point closest to the current point at this moment is $P^*(x_r(s^*), y_r(s^*))$; and

the current pose is $P_0(x_i, y_i, \theta_i)$: $x_i$ -the x-coordinate value in a world coordinate system, $y_i$ -a y-coordinate value in the world coordinate system, $\theta_i$ -an inclination angle of a vehicle coordinate system (with a midpoint of the vehicle's front wheels as an origin and a direction of the vehicle's front as a positive x-axis, in accordance with a right-hand rule) in the world coordinate system, that is, a current posture of the vehicle;and

the reference path is $\Gamma(x_r(s), y_r(s))$: $x_r(s)$- an x-coordinate expression of the reference path in the world coordinate system, $y_r(s)$- a y-coordinate expression of the reference path in the world coordinate system, s- an independent variable parameter;and

$s^*$: an independent variable parameter corresponding to the point closest to the current point in the reference path;

then a tangent unit vector at $P^*(x_r(s^*), y_r(s^*))$ is
$$\vec{t} = \frac{\left(\frac{\partial x_r(s)}{\partial s}|s=s^*, \frac{\partial y_r(s)}{\partial s}|s=s^*\right)}{\left\|\frac{\partial x_r(s)}{\partial s}|s=s^*, \frac{\partial y_r(s)}{\partial s}|s=s^*\right\|} = (t_x, t_y);$$

then an absolute deviation vector at $P_0(x_i, y_i, \theta_i)$ is $\vec{d} = (x_i - x_r(s^*), y_i - y_r(s^*)) = (d_x, d_y)$;

then the lateral position deviation $\varepsilon_y$ at $P_0(x_i, y_i, \theta_i)$ is a cross product of $\vec{d}$ and $\vec{t}$:

$$\varepsilon_y = \vec{t} \times \vec{d} = \begin{vmatrix} x & y \\ t_x & t_y \\ d_x & d_y \end{vmatrix} = t_x d_y - t_y d_x;$$

then the yaw angle deviation $\varepsilon_\theta$ at $P_0(x_i, y_i, \theta_i)$ is:

$$\varepsilon_\theta = \theta_i - a\,tan\,2\left(\frac{\partial y_r(s)}{\partial s}\bigg|s = s^*, \frac{\partial x_r(s)}{\partial s}\bigg|s = s^*\right).$$

2.Calculate the curvature deviation based on the current posture and the reference path:
a path curvature at $P^*(x_r(s^*), y_r(s^*))$ is:

$$\kappa(s^*) = \frac{\frac{\partial^2 y_r(s)}{\partial s^2}\big|_{s=s^*} * \frac{\partial x_r(s)}{\partial s}\big|_{s=s^*} - \frac{\partial^2 x_r(s)}{\partial s^2}\big|_{s=s^*} * \frac{\partial y_r(s)}{\partial s}\big|_{s=s^*}}{\sqrt{\left(\left(\frac{\partial x_r(s)}{\partial s}\big|_{s=s^*}\right)^2 + \left(\frac{\partial y_r(s)}{\partial s}\big|_{s=s^*}\right)^2\right)^3}};$$

and based on distances from a midpoint of front wheels and a midpoint of rear wheels to an articulation and an articulation angle, it is easy to find an approximate circle tangent to the two midpoints, whose radius is r,

then the curvature deviation at $P_0(x_i, y_i, \theta_i)$ is: $\varepsilon_c = \frac{1}{r} - \kappa(s^*)$.

3.Construct a kinematic error model:
a nonholonomic constraint equation:

$$\begin{cases} \dot{x}_1 \sin\theta_1 = \dot{y}_1 \cos\theta_1 \\ \dot{x}_0 \sin\theta_0 = \dot{y}_0 \cos\theta_0 \end{cases},$$

and a two-segment rigid body constraint equation:

$$\begin{cases} x_0 = x_1 + L_1 \cos\theta_1 + L_0 \cos\theta_0 \\ y_0 = y_1 + L_1 \sin\theta_1 + L_0 \sin\theta_0 \end{cases},$$

wherein $(x_0, y_0)$, $(x_1, y_1)$are coordinates of a midpoint of front wheels and a midpoint of rear wheels in a world coordinate system respectively, and $\theta_0, \theta_1$ are inclination angles of a front wheel midpoint coordinate system (with the midpoint of front wheels as an origin, a vehicle forward direction as an x-positive, in accordance with a right-hand rule) and a rear wheel midpoint coordinate system (with the midpoint of rear wheels as an origin, the vehicle forward direction as an x-positive, in accordance with a right-hand rule) in the world coordinate system, that is, current postures of front and rear parts of the vehicle.

According to the nonholonomic constraint equation and the two-segment rigid body constraint equation of the articulated vehicle, a relationship between the error vector $\vec{x} = (\varepsilon_y, \varepsilon_\theta, \varepsilon_c)^T$ and its differential $\dot{\vec{x}} = \left(\dot{\varepsilon}_y, \dot{\varepsilon}_\theta, \dot{\varepsilon}_c\right)^T$ is

$$\begin{bmatrix} \dot{\varepsilon}_y \\ \dot{\varepsilon}_\theta \\ \dot{\varepsilon}_c \end{bmatrix} = \begin{bmatrix} 0 & v_0 \cos\varepsilon_\theta & 0 \\ 0 & 0 & v_0 \\ 0 & 0 & 0 \end{bmatrix} \begin{bmatrix} \varepsilon_y \\ \varepsilon_\theta \\ \varepsilon_c \end{bmatrix} + \begin{bmatrix} 0 \\ 0 \\ \frac{1}{L} \end{bmatrix} \dot{\gamma} + \begin{bmatrix} 0 \\ 0 \\ \frac{L_1}{v_0 L} \end{bmatrix} \ddot{\gamma};$$

where $L_0$ is a front axle distance (a distance from an articulation to the midpoint of front wheels), $L_1$ is a rear axle distance, and an overall wheelbase $L = L_0 + L_1$ is to eliminate $\ddot{\gamma}$. Process the state variables slightly to get:

$$\begin{bmatrix} \dot{\varepsilon}_y \\ \dot{\varepsilon}_\theta \\ \dot{\varepsilon}_c{}' \end{bmatrix} = \begin{bmatrix} 0 & v_0\, cos\, \varepsilon_\theta & 0 \\ 0 & 0 & v_0 \\ 0 & 0 & 0 \end{bmatrix} \begin{bmatrix} \varepsilon_y \\ \varepsilon_\theta \\ \varepsilon_c{}' \end{bmatrix} + \begin{bmatrix} 0 \\ \frac{L_1}{L} \\ \frac{1}{L} \end{bmatrix} \dot{\gamma},\ \varepsilon_c{}' = \varepsilon_c - \frac{L_1\dot{\gamma}}{v_0 L};$$

$v_0$: a speed of the front part of the vehicle;
$\gamma$: an angle at the articulation;
$\dot{\gamma}$: a angular velocity at the articulation;
$\ddot{\gamma}$: a angular acceleration at the articulation.

4. Solve the model:
the above model is a typical first-order linear state equation, which can be solved by standard LQR or MPC to obtain the control value $\dot{\gamma}$.

LQR (Linear Quadratic Regulator) and MPC (Model Predictive Control) are two commonly used methods for solving first-order linear state equations. The former is a full-state feedback control, and the latter is a rolling optimization control. Both are based on the minimum weighted cost function of the state vector and the input as the optimization goal to find the optimal control solution. Both have mature toolboxes that can be called in MATLAB.

This embodiment is aimed at the construction of an articulated steering vehicle control model. It is simple and convenient, and can solve the problem of the movement trajectory of the front and rear parts being consistent with the path during the curve driving process.

It should be noted that in this article, relational terms such as first and second are only used to distinguish one entity or operation from another entity or operation, and do not necessarily require or imply any such actual relationship or order between these entities or operations. Moreover, the terms "comprise", "include" or any other variants thereof are intended to cover non-exclusive inclusion, so that a process, method, article or device including a series of elements includes not only those elements, but also other elements not explicitly listed, or also includes elements inherent to such a process, method, article or device.

Finally, it should be noted that the above is only a preferred embodiment of the present invention and is not intended to limit the present invention. Although the present invention is described in detail with reference to the aforementioned embodiments, for those skilled in the art, it is still possible to modify the technical solutions recorded in the aforementioned embodiments, or to replace some of the technical features therein by equivalents. Any modification, equivalent replacement, improvement, etc. made within the spirit and principle of the present invention shall be included in the scope of protection of the present invention.

**Claims**

1.  A new control method for an articulated vehicle, **characterized by** comprising the following steps:

    S100: calculating a lateral position deviation and a yaw angle deviation based on a current pose and a reference path;
    S200: calculating a curvature deviation based on the current pose and the reference path;
    S300: constructing a kinematic error model to solve a control value.

2.  The new control method for an articulated vehicle according to claim 1, **characterized in that** in the step S100,

    assuming that the current pose of the vehicle is $P_0(x_i, y_i, \theta_i)$, and the reference path is $\Gamma(x_r(s), y_r(s))$, where s is a parameter, and if a point closest to a current point at this moment is $P^*(x_r(s^*), y_r(s^*))$; and
    the current pose is $P_0(x_i, y_i, \theta_i)$: $x_i$ -an x-coordinate value in a world coordinate system, $y_i$ -a y-coordinate value in the world coordinate system, $\theta_i$ -an inclination angle of a vehicle coordinate system (with a midpoint of the vehicle's front wheels as an origin and a direction of the vehicle's front as a positive x-axis, in accordance with a right-hand rule) in the world coordinate system, that is, a current posture of the vehicle; and
    the reference path is $\Gamma(\boldsymbol{x_r(s)}, \boldsymbol{y_r(s)})$: $x_r(s)$- an x-coordinate expression of the reference path in the world coordinate system, $y_r(s)$- a y-coordinate expression of the reference path in the world coordinate system, s- an independent variable parameter; and
    $\boldsymbol{s^*}$: an independent variable parameter corresponding to the point closest to the current point in the reference path;

then a tangent unit vector at $P^*(x_r(s^*), y_r(s^*))$ is $\vec{t} = \dfrac{\left(\frac{\partial x_r(s)}{\partial s}|s=s^*, \frac{\partial y_r(s)}{\partial s}|s=s^*\right)}{\left\|\frac{\partial x_r(s)}{\partial s}|s=s^*, \frac{\partial y_r(s)}{\partial s}|s=s^*\right\|} = (t_x, t_y);$

then an absolute deviation vector at $P_0(x_i, y_i, \theta_i)$ is $\vec{d} = (x_i - x_r(s^*), y_i - y_r(s^*)) = (d_x, d_y);$

then the lateral position deviation $\varepsilon_y$ at $P_0(x_i, y_i, \theta_i)$ is a cross product of $\vec{d}$ and $\vec{t}$:

$$\varepsilon_y = \vec{t} \times \vec{d} = \begin{vmatrix} x & y \\ t_x & t_y \\ d_x & d_y \end{vmatrix} = t_x d_y - t_y d_x;$$

then the yaw angle deviation $\varepsilon_\theta$ at $P_0(x_i, y_i, \theta_i)$ is:

$$\varepsilon_\theta = \theta_i - a\,tan\,2\left(\frac{\partial y_r(s)}{\partial s}|s = s^*, \frac{\partial x_r(s)}{\partial s}|s = s^*\right).$$

3.  The new control method for an articulated vehicle according to claim 1, **characterized in that** in the step S200, a path curvature at $P^*(x_r(s^*), y_r(s^*))$ is:

$$\kappa(s^*) = \frac{\frac{\partial^2 y_r(s)}{\partial s^2}|s=s^* * \frac{\partial x_r(s)}{\partial s}|s=s^* - \frac{\partial^2 x_r(s)}{\partial s^2}|s=s^* * \frac{\partial y_r(s)}{\partial s}|s=s^*}{\sqrt{\left(\left(\frac{\partial x_r(s)}{\partial s}|s=s^*\right)^2 + \left(\frac{\partial y_r(s)}{\partial s}|s=s^*\right)^2\right)^3}};$$

and based on distances from a midpoint of front wheels and a midpoint of rear wheels to an articulation and an articulation angle, it is easy to find an approximate circle tangent to the two midpoints, whose radius is r,

then the curvature deviation at $P_0(x_i, y_i, \theta_i)$ is:    $\varepsilon_c = \dfrac{1}{r} - \kappa(s^*)$ .

4.  The new control method for an articulated vehicle according to claim 1, **characterized in that** in the step S300,

a nonholonomic constraint equation:

$$\begin{cases} \dot{x}_1 \sin \theta_1 = \dot{y}_1 \cos \theta_1 \\ \dot{x}_0 \sin \theta_0 = \dot{y}_0 \cos \theta_0 \end{cases},$$

and a two-segment rigid body constraint equation:

$$\begin{cases} x_0 = x_1 + L_1 \cos \theta_1 + L_0 \cos \theta_0 \\ y_0 = y_1 + L_1 \sin \theta_1 + L_0 \sin \theta_0 \end{cases},$$

wherein $(x_0, y_0)$, $(x_1, y_1)$ are coordinates of a midpoint of front wheels and a midpoint of rear wheels in a world coordinate system respectively, and $\theta_0, \theta_1$ are inclination angles of a front wheel midpoint coordinate system (with the midpoint of front wheels as an origin, a vehicle forward direction as an x-positive, in accordance with a right-hand rule) and a rear wheel midpoint coordinate system (with the midpoint of rear wheels as an origin, the vehicle forward direction as an x-positive, in accordance with a right-hand rule) in the world coordinate system, that is, current postures of front and rear parts of the vehicle;

and according to the nonholonomic constraint equation and the two-segment rigid body constraint equation of the articulated vehicle, a relationship between an error vector $\vec{x} = (\varepsilon_y, \varepsilon_\theta, \varepsilon_c)^T$ and its differential $\vec{\dot{x}} = \left(\dot{\varepsilon}_y, \dot{\varepsilon}_\theta, \dot{\varepsilon}_c\right)^T$ is

$$\begin{bmatrix} \dot{\varepsilon}_y \\ \dot{\varepsilon}_\theta \\ \dot{\varepsilon}_c \end{bmatrix} = \begin{bmatrix} 0 & v_0 \cos \varepsilon_\theta & 0 \\ 0 & 0 & v_0 \\ 0 & 0 & 0 \end{bmatrix} \begin{bmatrix} \varepsilon_y \\ \varepsilon_\theta \\ \varepsilon_c \end{bmatrix} + \begin{bmatrix} 0 \\ 0 \\ \frac{1}{L} \end{bmatrix} \dot{\gamma} + \begin{bmatrix} 0 \\ 0 \\ \frac{L_1}{v_0 L} \end{bmatrix} \ddot{\gamma};$$

where $L_0$ is a front axle distance (a distance from an articulation to the midpoint of front wheels), $L_1$ is a rear axle distance, and an overall wheelbase $L = L_0 + L_1$ is to eliminate $\ddot{\gamma}$, and processing the state variables slightly to get:

$$\begin{bmatrix} \dot{\varepsilon}_y \\ \dot{\varepsilon}_\theta \\ \dot{\varepsilon}_c' \end{bmatrix} = \begin{bmatrix} 0 & v_0 \cos \varepsilon_\theta & 0 \\ 0 & 0 & v_0 \\ 0 & 0 & 0 \end{bmatrix} \begin{bmatrix} \varepsilon_y \\ \varepsilon_\theta \\ \varepsilon_c' \end{bmatrix} + \begin{bmatrix} 0 \\ \frac{L_1}{L} \\ \frac{1}{L} \end{bmatrix} \dot{\gamma}, \varepsilon_c' = \varepsilon_c - \frac{L_1 \dot{\gamma}}{v_0 L};$$

$v_0$: a speed of the front part of the vehicle;
$\gamma$: an angle at the articulation;
$\dot{\gamma}$: an angular velocity at the articulation;
$\ddot{\gamma}$: an angular acceleration at the articulation;
and using standard LQR or MPC to solve the equation and then obtaining the control value $\dot{\gamma}$.

FIG. 1

## INTERNATIONAL SEARCH REPORT

| International application No. |
| --- |
| **PCT/CN2023/138362** |

### A. CLASSIFICATION OF SUBJECT MATTER

G05B 13/04(2006.01)i;  G05D1/43(2024.01)i;  G05D 1/644(2024.01)i;  G05D 109/10(2024.01)i

According to International Patent Classification (IPC) or to both national classification and IPC

### B. FIELDS SEARCHED

Minimum documentation searched (classification system followed by classification symbols)

IPC：G05B G05D

Documentation searched other than minimum documentation to the extent that such documents are included in the fields searched

Electronic data base consulted during the international search (name of data base and, where practicable, search terms used)

CNABS; CNTXT; CNKI; WPABSC; ENTXTC; WPABS; VEN; ENTXT: 上海联适导航技术股份有限公司, 铰接, 挂车, 位姿, 参考路径, 横向, 位置, 偏差, 横摆角, 曲率, 误差, 求解, hinged, articulated, trailer, pose, reference path, transverse, location, deviation, swing angle, curvature, solving

### C. DOCUMENTS CONSIDERED TO BE RELEVANT

| Category* | Citation of document, with indication, where appropriate, of the relevant passages | Relevant to claim No. |
| --- | --- | --- |
| X | CN 113671962 A (XIANGTAN UNIVERSITY) 19 November 2021 (2021-11-19) description, paragraphs [0005]-[0089] | 1-3 |
| A | CN 103121451 A (DALIAN UNIVERSITY OF TECHNOLOGY) 29 May 2013 (2013-05-29) entire document | 1-4 |
| A | CN 108622104 A (HUBEI UNIVERSITY OF AUTOMOTIVE TECHNOLOGY) 09 October 2018 (2018-10-09) entire document | 1-4 |
| A | CN 115973132 A (DONGFENG LIUZHOU MOTOR CO., LTD.) 18 April 2023 (2023-04-18) entire document | 1-4 |
| A | CN 116853293 A (JIANGSU UNIVERSITY OF TECHNOLOGY) 10 October 2023 (2023-10-10) entire document | 1-4 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 January 2024** | **13 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/138362**

| Patent document cited in search report | | | Publication date (day/month/year) | Patent family member(s) | | | Publication date (day/month/year) |
|---|---|---|---|---|---|---|---|
| CN | 113671962 | A | 19 November 2021 | CN | 113671962 | B | 21 November 2023 |
| CN | 103121451 | A | 29 May 2013 | CN | 103121451 | B | 19 August 2015 |
| CN | 108622104 | A | 09 October 2018 | None | | | |
| CN | 115973132 | A | 18 April 2023 | None | | | |
| CN | 116853293 | A | 10 October 2023 | None | | | |

Form PCT/ISA/210 (patent family annex) (July 2022)